# EUROPÄISCHE PATENTANMELDUNG

(11) **EP 0 844 721 A2**
(43) Veröffentlichungstag der Anmeldung: **27.05.1998**
(21) Anmeldenummer: 97118386.8
(22) Anmeldetag: 23.10.1997
(51) Int. Cl.: H02J 7/00

(54) **Schaltungsanordnung für Fernsprechstromversorgungsanlagen**

(30) Priorität: 22.11.1996 DE 19648339
(71) Anmelder: Deutsche Telekom AG, 53113 Bonn (DE)
(72) Erfinder: Maus, Wolfgang, 56357 Oelsberg (DE); Britz, Paul, Dipl.-Ing. (FH), 54413 Beuren (DE)

(57) **Zusammenfassung**

Es wird eine neue Stromversorgungsanlage, insbesondere für Fernmeldeanlagen angegeben, die aus einer Netzverteiler-tafel (2), Gleichrichtern (3, 3'), einem Gleichstrom-/Batterieverteiler (4) und optional aus einem Gegenzellenbaustein (5) besteht, die über Steuerleitungen mit einer Ablaufsteuerschaltung (6) verbunden sind, über die die Signalanpassungen, Potentialanpassungen und Zeitfolgesteuerungen erfolgen. Die Ablaufsteuerschaltung (6) kann als speicherprogrammierbare Steuerschaltung mit analogen Eingängen und Schnittstelle oder aus einem Signal- bzw. Mikroprozessor bestehen, der in die Steuereinrichtung des Steuerfeldes der Anlage oder in das Batterieschaltfeld integriert ist. Die Schaltungsanordnung eignet sich sowohl für thyristorgesteuerte als auch getaktete Stromversorgungsanlagen.

## Beschreibung

Die Erfindung betrifft eine Schaltungsanordnung für Fernsprechstromversorgungsanlagen oder dergleichen nach dem Oberbegriff des Patentanspruches 1.

Fernsprechstromversorgungsanlagen (im nachfolgenden FSV-Anlagen genannt) sind von den verschiedensten Herstellern grundsätzlich bekannt. Da jedoch die Gleichrichtergeräte bzw. Gleichrichtermodule nur in Zusammenarbeit mit einer Steuereinrichtung bzw. eines Batterieschaltfeldes mit Steuereinrichtung des gleichen Herstellers betrieben werden können, ist bisher durch einen Betreiber ein kompletter Aufbau einer solchen Anlage aus Bausteinen verschiedener Hersteller nicht möglich gewesen. Dadurch wird zum Beispiel auch der Wiedereinsatz von Gleichrichtern stark eingeschränkt.

Aufgrund der Entwicklung bei EDV-Anlagen und bei Fernsprech- bzw. Fernmeldeanlagen und bei Geräten der Mikroelektronik und Kommunikationstechnik hat in den vergangenen Jahren der Einsatz unterbrechungsfreier Stromversorgungen (USV) erheblich zugenommen. Für diese kritischen Verbraucher können Netzstörungen, wie zum Beispiel Spannungs- und Frequenzschwankungen, Überspannungen, Stromausfälle u.s.w. zu Ausfall, Produktionsstillstand, Datenverlust sowie Problemen beim Wiederanfahren der Anlagen führen.

Eine derartige Anlage ist zum Beispiel in DE 4 108 259 beschrieben. Unterbrechungsfreie Stromversorgungen für kritische Verbraucher sind auch in epz, Band 114, 1993, Heft 18, Seiten 1116 bis 1121 beschrieben. Die hierin beschriebenen Anlagen haben jedoch auch den Nachteil, daß sie nur Bauteile bzw. Schaltungen eines bestimmten Herstellers in einer Schaltung verwenden können.

Der Erfindung liegt deshalb die Aufgabe zugrunde, eine Stromversorgungsanlage bzw. -schaltung für Fernsprech- bzw. Fermeldeanlagen, EDV-Anlagen, Kommunikationsanlagen und -systemen oder dergleichen modular aufzubauen und durch den Einsatz einer speicherprogammierbaren Steuerung erstmals alle herkömmlichen nicht kompatiblen thyristorgesteuerten Gleichrichtergeräte, sowie Gleichrichtergeräte in getakteter Technik und andere Komponenten verschiedener Hersteller aufzubauen bzw. zu betreiben.

Die erfindungsgemäße Lösung ergibt sich insbesondere aus dem Kennzeichen des Patentanspruchs 1.

Weitere Merkmale der Erfindung bzw. Ausgestaltungen sind in den Kennzeichen der Patentansprüche 2 bis 6 charakterisiert.

Der modulare Aufbau einer derartigen Stromversorgungsanlage ist dadurch gewährleistet, daß eine solche Anlage gemäß dem Prinzip der Erfindung aus einer sogenannten Netzverteilertafel, einem Gleichrichter/Batterieverteiler, einem Gleichstromverteiler, gegebenenfalls einem Gegenzellenbaustein und einer Ablaufsteuerschaltung besteht, die durch Programmierung entsprechend den in den jeweiligen technischen Lieferbedingungen für Fernmeldestromversorgungsanlagen in getakteter Technik bzw. in thyristorgesteuerter Technik festgelegten Funktionsabläufen und dem in der Benutzeranforderung festgelegten Meldeumfang sehr einfach angepaßt werden kann, so daß die entsprechende Steuerung der Schaltung bzw. der Komponenten der Anlage je nach den Erfordernissen sehr einfach angepaßt bzw. geändert werden kann. Da die Schaltung der Ablaufsteuerung im wesentlichen aus handelsüblichen speicherprogrammierbaren Schaltungen, wie zum Beispiel EEPROMs besteht, ist auch der technische Aufwand für eine solche Lösung klein. Durch diesen Aufbau und die erstmals angewendete Steuerung ist es erstmals möglich, daß Bausteine unterschiedlicher Hersteller in einer Gesamtanlage vereinigt werden können und ohne Probleme zusammenarbeiten. Außerdem ist bei Ersatz von defekten Bausteinen bzw. bei der Lagerhaltung eine große Vereinfachung möglich. Außerdem kann die gesamte Montage bzw. eine Änderung der Steuerung durch Umprogrammierung sehr einfach bewältigt werden, ohne daß Spezialisten verschiedener Firmen erforderlich sind.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen. Die Erfindung wird im folgenden anhand von in der Zeichnung dargestellten Ausführungsbeispielen näher beschrieben.

In der Beschreibung, in den Patentansprüchen, der Zusammenfassung und in der Zeichnung werden die in der hinten angeführten Liste der Bezugszeichen verwendeten Begriffe und die zugeordneten Bezugszeichen verwendet.

In der Zeichnung bedeuten:
- Fig. 1: ein Prinzipschaltbild einer FSV-Anlage;
- Fig. 2: ein Prinzipschaltbild einer erweiterten FSV-Anlage;
- Fig. 3: ein Prinzipschaltbild einer FSV-Anlage mit Gegenzellen;
- Fig. 4: ein Prinzipschaltbild einer FSV-Anlage mit Gegenzellen und Entladeschütz;
- Fig. 5: eine weitere modifizierte Schaltungsanordnung einer FSV-Anlage;
- Fig. 6: ein Beispiel für eine Beschaltung der Ein- und Ausgänge einer Ablaufsteuerung;
- Fig. 7: ein detailliertes Schaltbild für einen Gleichstromverteiler/Batterieverteiler;
- Fig. 8: ein detailliertes Schaltbild für einen Gegenzellenbaustein;
- Fig. 9: ein Schaltbild für einen Gleichstromverteiler für 1 bis n Verbraucher und
- Fig. 10: einen generellen Übersichtsplan über eine FSV-Anlage im Baukastenprinzip.

Grundsätzlich besteht die.in der Zeichnung dargestellte modulare Fernsprechstromversorgungsanlage unter Verwendung nicht kompatibler, funktionsprinzipunabhängiger Gleichrichtersysteme aus einer Netzverteilertafel 2, die über einen Transformator oder eine Netzkopplung 1 mit dem Stromversorgungsnetz verbunden ist und andererseits aus 1 bis n Gleichrichtern 3, die mit ihrem Ausgang mit einem Gleichstrom-/Batterieverteiler 4 verbunden sind, an dem zum Beispiel 62 Volt Verbraucher 13 und Batterien 11 angeschlossen sind. Die Netzverteilertafel 2 und die 1 bis n Gleichrichter 3, sind über Steuerleitungen 8 mit einer Ablaufsteuerschaltung 6 verbunden, die entsprechend den Spezifikationen und Erfordernissen der Schaltungskomponenten bzw. der Gesamtanlage die Steuerung entsprechend durchführt, wie später noch detailliert erklärt wird.

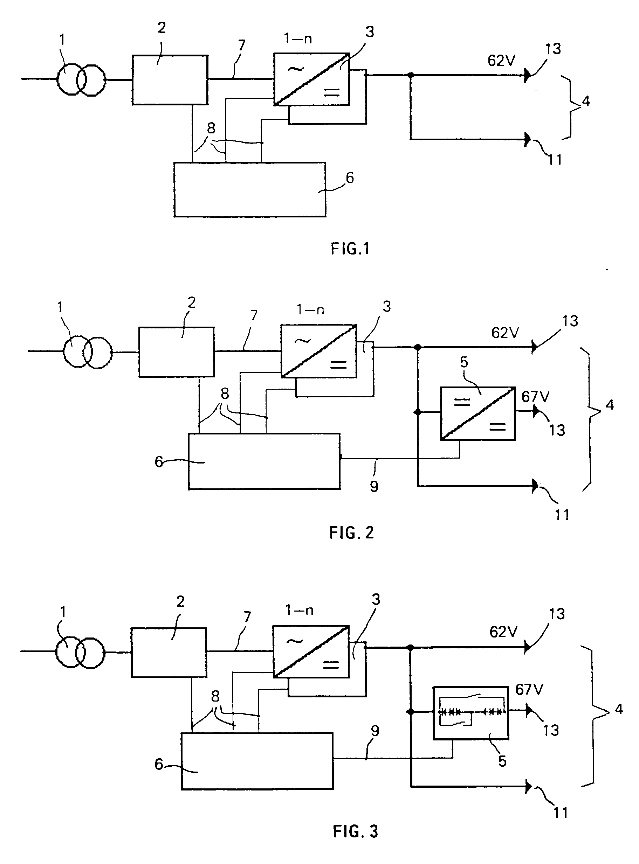

In Fig. 2 ist eine modifizierte Schaltungsanordnung nach Fig. 1 gezeigt. Die Modifizierung besteht darin, daß zu den 62 Volt Verbrauchern 13 und der parallel geschalteten Batterie 11 noch parallel geschaltete 67 Volt Verbraucher 13 vorhanden sind, die an einen Gegenzellenbaustein 5 angeschlossen sind. Gleichrichtergeräte 3, die Batterie 11 und die 62 Volt Verbraucher 13 sind parallel geschaltet. Fällt das Gleichrichtergerät 3 aus, dann werden die 62 Volt Verbraucher 13 von der Batterie 11 versorgt. Die Versorgung der 67 Volt Verbraucher 13 erfolgt aus dem Gegenzellenbaustein 5 mit Reduktionsdioden bzw. über eine nicht dargestellte Spannungsausgleichseinrichtung in Form eines DC/DC-Wandlers aus einer 67 Volt Schiene. Die Reduktionsdioden des Gegenzellenbausteins 5 sind in der Modifikation nach Fig. 3 zu sehen, wobei zu beachten ist, daß wie in Fig. 2 die Ablaufsteuerung 6 auch den Gegenzellenbaustein 5 in jeder der angegebenen Schaltungen steuert.

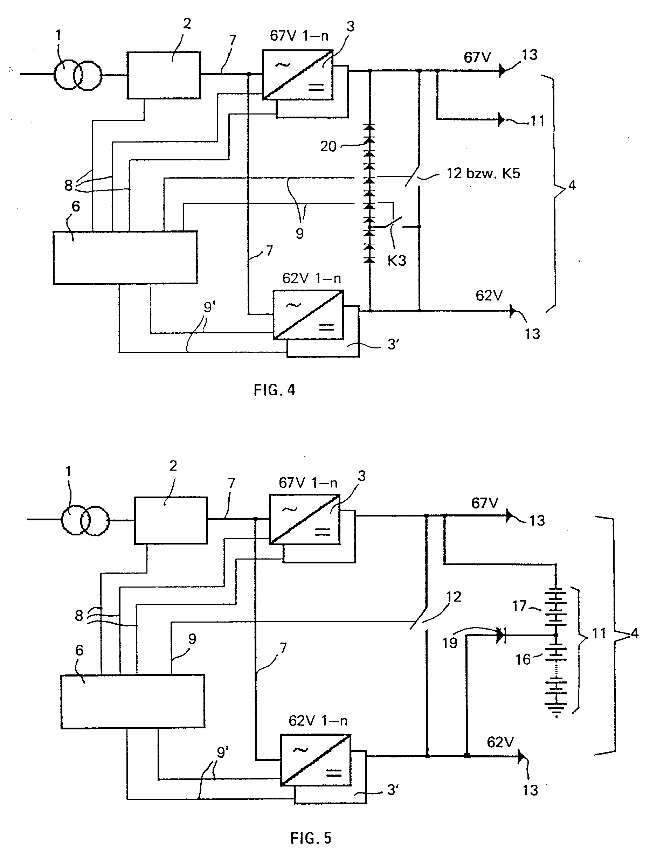

Die Schaltung nach Fig. 4 besteht wiederum aus dem Transformator oder der Netzkopplung 1, die mit der Netzverteiltafel 2 verbunden ist. Mit der Netzverteiltafel sind starkstrommäßig 1 bis n 67 Volt Gleichrichter 3 und 1 bis n 62 Volt Gleichrichter 3' verbunden. Die 67 Volt Gleichrichter 3, die Batterie 11 und die 67 Volt Verbraucher 13 sind parallel geschaltet. Fällt der Gleichrichter 3 aus, dann wird der angeschlossene 67 Volt Verbraucher 13 von der Batterie 11 versorgt. Die 62 Volt Gleichrichter 3' versorgen die 62 Volt Verbraucher 13. Fällt der Gleichrichter 3' aus, dann werden die 62 Volt Verbraucher unterbrechungsfrei über die Gegenzellen bzw. den Gegenzellenbaustein 5 versorgt. Dies erfolgt nach Schließen des Entladeschützes 12, wodurch die 62 Volt Verbraucher direkt aus der Batterie 11 versorgt werden. Gesteuert werden die Abläufe der Schaltung bzw. der Anlage durch die Ablaufsteuerung 6, die über Leitungen 7 mit der Netzverteilertafel 2 und den 1 bis n Gleichrichtern 3 verbunden ist. Außerdem ist die Ablaufsteuerschaltung 6 noch über Leitungen 9 mit den 1 bis n 62 Volt Gleichrichtern 3', den Gegenzellen bzw. dem Gegenzellenbaustein 5 und mit dem Entladeschütz 12 zur Steuerung verbunden. Die Ablaufsteuerung 6 übernimmt die Erfassung und die Bewertung der Anlagensignale, die Überwachung der Verbraucherspannungen und die Ansteuerung der Kennlinien der jeweiligen Gleichrichter. Die Ablaufsteuerschaltung 6 wird zumeist in einem Steuerfeld der Gesamtanlage oder dem Batterieschaltfeld mit Steuereinrichtung integriert.

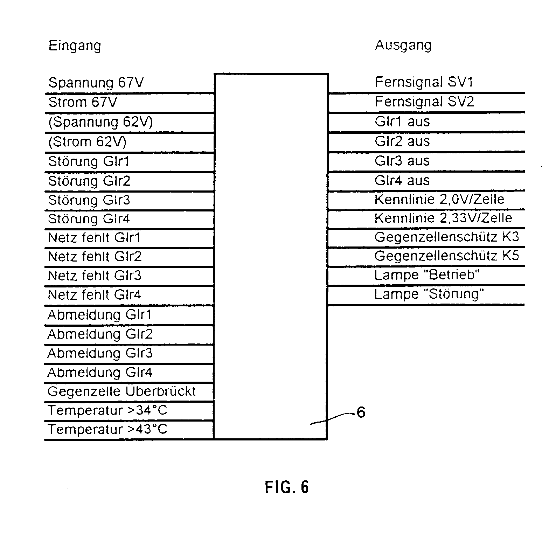

In Fig. 5 ist eine weitere Variante der Schaltungsanordnung zur Stromversorgung, insbesondere von Fernsprechanlagen, dargestellt. Die Fig. 5 unterscheidet sich von der Fig. 4 dadurch, daß die Batterie 11 in die Zelle 16 und in die Zelle 17 unterteilt ist. Die 62 Volt Verbraucher sind über eine Diode 19 mit der Anzapfung, die zwischen der Zelle 16 und der Zelle 17 liegt, der Batterie 11 verbunden. Fällt das Gleichrichtergerät 3' für die 62 Volt Verbraucher aus, dann werden die 62 Volt Verbraucher unterbrechungsfrei über die Diode 19 aus der Zelle 16 der Batterie 11 versorgt. Nach Schließen des Entladeschützes 12 werden die 62 Volt Verbraucher direkt aus der Batterie 11 versorgt. Die 67 Volt Verbraucher werden wie in der Schaltungsanordnung nach Fig. 4 bei Ausfall des Gleichrichters 3 unterbrechungsfrei direkt von der Batterie 11 versorgt.

In Fig. 6 ist ein Ausführungsbeispiel der Beschaltung der Ein- und Ausgänge der Ablaufsteuerschaltung 6 gezeigt. Die Ablaufsteuerschaltung 6 besteht im wesentlichen aus einer handelsüblichen speicherprogrammierbaren Schaltung oder einem entsprechenden Mikroprozessor. Die Programmierung der Ablaufsteuerschaltung 6 erfolgt entsprechend den in den jeweiligen technischen Lieferbedingungen der Stromver-sorgung für die entsprechenden Fernmeldestromversorgungsanlagen in getakteter Technik bzw. in thyristorgesteuerter Technik festgelegten Funktionsabläufen und dem in der Benutzeranforderung festgelegten Meldungsumfang. Die Versorgungsspannung der Ablaufsteuerung 6 wird durch einen handelsüblichen DC/DC-Wandler erzeugt, der bei geforderter Leistung mit hohem Wirkungsgrad Spannungen entsprechend umsetzt. Die Anpassung der Eingangsspannungen der analogen Eingänge auf der linken Seite der Ablaufsteuerschaltung nach Fig. 6 an die vorhandenen Spannungen erfolgt durch Spannungsteiler bzw. durch Trennverstärker. Die Anpassung der binären Eingänge der Schaltung an eventuell vorhandene Steuerspannungen, wie zum Beispiel 230 Volt Wechselstrom bzw. minus 67 Volt Gleichstrom, erfolgt durch den Einsatz von Interface-Relais oder auch durch entsprechende Spannungsteiler. Steuersignale, die über potentialfreie Kontakte der Gleichrichtermodule geschaltet werden, können wahlweise gegen 0 Volt oder plus 24 Volt geschaltet werden, da die Schaltungsanordnung nach Fig. 6 sowohl mit positiver als auch mit negativer Logik realisierbar ist. Dadurch ist es möglich, daß Fernmeldestromversorgungsanlagen im Baukastenprinzip erstmals aufgebaut werden können und daß alle herkömmlichen thyristorgesteuerten bzw. getakteten Gleichrichter, deren Ansteuerung nicht über einen Datenbus erfolgt, ohne die vom gleichen Hersteller stammende Steuereinrichtung betrieben werden können. Ein Beispiel für eine reale Beschaltung der binären Ein- und Ausgänge entsprechend den erforderlichen Potentialen bzw. den Signalen ist in Fig. 6 durch die Eingangs- bzw. Ausgangsleitungen mit entsprechender Bezeichnung dargestellt.

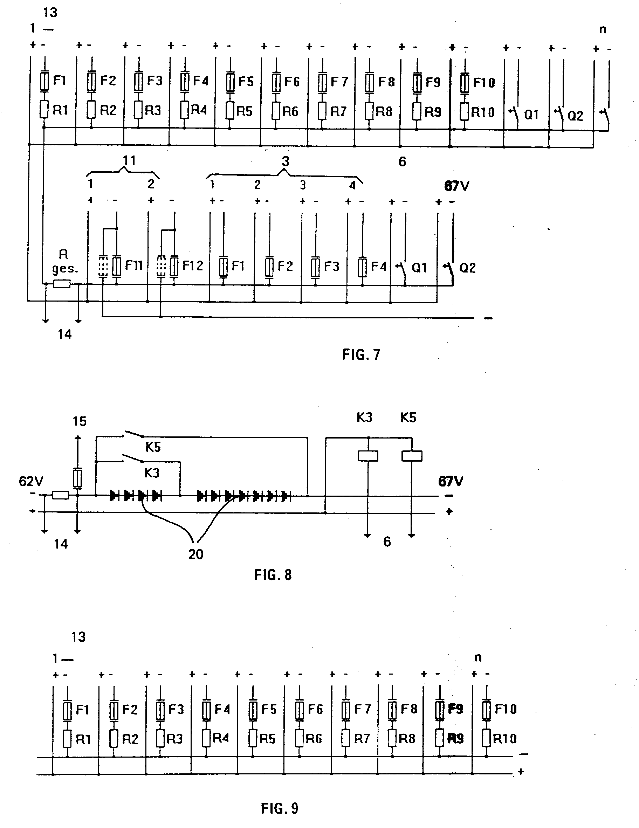

In Fig. 7 ist ein Gleichstromverteiler/Batterieverteiler 4 für 1 bis n Verbraucher 13 gezeigt. In dieser Schaltung sind die Anschlüsse für die Batterie 11, die Gleichrichter 3, die Ablaufsteuerschaltung 6 sowie die Anschlüsse für den Stromfühler 14 zur Ablaufsteuerschaltung 6 und die Ladeschiene bzw. den Belastungswiderstand 18 gezeigt. Der Minuspol der Spannungsversorgung für die Fühlerspannung und für die Versorgungsspannung der Ablaufsteuerschaltung 6 sind durch Schalter Q1 und Q2 schaltbar realisiert wie auch die letzten drei Verbraucher 13 durch die oben eingezeichneten Schalter Q1 bis Q3.

In Fig. 8 ist ein Gegenzellenbaustein 5 dargestellt, der über einen Eingang mit der Ablaufsteuerschaltung 6 verbunden ist und mit einem Ausgang 14 mit dem Stromfühler. Der Gegenzellenbaustein 5 besteht aus hintereinandergeschalteten Dioden, die über einen Kontakt K3 und einen Kontakt K5 so geschaltet werden können, daß bei Stromausfall sowohl die 62 Volt- als auch die 67 Volt-Spannungsversorgung unterbrechungsfrei für die Ablaufsteuerschaltung 6 erhalten werden kann. In Fig. 9 ist ein Ausführungsbeispiel für den Gleichstromverteiler 4 für 1 bis n Verbraucher 13 gezeigt. Er besteht im wesentlichen aus den Eingängen für die Verbraucher 13 und den beiden Potentialleitungen Minus und Plus, wobei jeweils die Plusleitung direkt an den Verbraucher gelangt und die Minusleitung über einen Widerstand R mit einer in Reihe geschalteten Stromsicherung F.

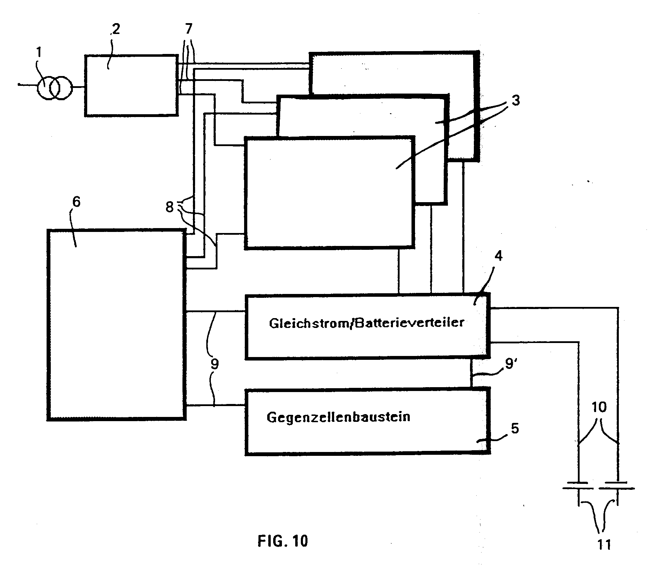

In Fig. 10 ist ein Übersichtsschaltplan für eine Stromversorgungsanlage für Fernmeldeanlagen bzw. elektronische Datenverarbeitungsanlagen oder sonstige Kommunikationsanlagen wie Multimediakommunikationsanlagen gezeigt. Die Schaltung besteht aus dem Anpassungstransformator bzw. der Koppeleinrichtung 1, der Netzverteilertafel 2, den Gleichrichtern 3, die über Leitungen 7 mit der Netzverteilertafel 2 verbunden sind und aus der Ablaufsteuerung 6, die über Steuerleitungen 8 und 9 mit den Gleichrichtern 3 bzw. dem Gleichstrom-/Batterieverteiler 4 und dem Gegenzellenbaustein 5 verbunden ist. Die Gleichrichter sind ihrerseits über Leitungen mit dem Gleichstrom-/Batterieverteiler 4 verbunden, der über Ausgangsleitungen 10 mit der Batterie 11 verbunden ist. Außerdem ist der Gleichstrom-/Batterieverteiler 4 über eine Leitung 9' zwecks Steuerung mit dem Gegenzellenbaustein 5 verbunden. Wie daraus zu ersehen ist, dient die Ablaufsteuerung 6 zur Ansteuerung der Gleichrichter, der Gleichstrom-/Batterieverteiler, des Gegenzellenbausteins, gegebenenfalls mit Reduktionsdioden und Entladeschütz. Es soll bemerkt werden, daß der Gegenzellenbaustein 5 zur Versorgung von 62 Volt Verbrauchern 13 ein optional angeordneter Baustein in dieser Schaltungsanordnung ist, der als steckbarer Baustein ausgeführt werden kann. Sind größere Verbraucherströme zu erwarten, können die Verbraucher 13 in mehrere Gruppen unterteilt werden.

### Liste der Bezugszeichen

- 1: Transformator oder Netzkopplung
- 2: Netzverteiltafel
- 3 + 3': Gleichrichter
- 4: Gleichstrom-/Batterieverteiler
- 5: Gegenzellenbaustein
- 6: Ablaufsteuerschaltung
- 7: Leitungen
- 8: Steuerleitungen
- 9 + 9': Steuerleitungen
- 10: Ausgangsleitungen
- 11: Batterie
- 12: Entladeschütz
- 13: Verbraucher
- 14: Stromfühler
- 15: Spannungsfühler
- 16/17: Zelle
- 18: Leitung Ladeschiene/Belastungswiderstand
- 19: Diode
- 20: Reduktionsdioden
- 21: Überbrückungsdioden

## Patentansprüche

1. Steuerschaltung für Stromversorgungsanlagen, bestehend aus nicht kompatiblen Netzverteilertafeln und Gleichrichtern sowie Transformatoren bzw. Koppelgliedern zur Anpassung an das Netz und Ausgangsleitungen für Verbraucher unterschiedlicher Spannungen, insbesondere für unterbrechungsfrei arbeitende Stromversorgungsanlagen für Fernsprech- und Fernmeldeanlagen, Computeranlagen, Kommunikationsanlagen oder dergleichen, dadurch gekennzeichnet,
daß eine programmierbare Ablaufsteuerschaltung (6) über Steuerleitungen (8, 9, 9') sowohl mit den Gleichrichtern (3, 3'), mit einem Gleichstrom/Batterieverteiler (4) und gegebenenfalls mit einem Gegenzellenbaustein (5) zu deren speicherprogrammierten Steuerung verbunden ist, wobei insbesondere die verwendeten gesteuerten Schaltungskomponenten, wie Gleichrichter (3), Gleichstrom-/Batterieverteiler (4) und Gegenzellenbaustein (5) grundsätzlich zueinander schaltungs-, schaltpotential- und schaltsignalmäßig nichtkompatibel zueinander ausgeführt sind.

2. Schaltungsanordnung nach Patentanspruch 1, dadurch gekennzeichnet,
daß die Ablaufsteuerschaltung (6) aus einer speicherprogrammierten Steuerschaltung mit zwei oder vier zusätzlichen analogen Eingängen für unterschiedliche Betriebsspannungen und einer Schnittstelle besteht, und
daß sie insbesondere in dem Steuerfeld der Anlage oder im Batterieschaltfeld mit Steuereinrichtung integriert ist.

3. Schaltungsanordnung nach Patentanspruch 1, dadurch gekennzeichnet,
daß die Ablaufsteuerschaltung (6) als Mikroprozessor oder als programmierbarer Signalprozessor ausgeführt ist.

4. Schaltungsanordnung nach einem der Patentansprüche 1 bis 3, dadurch gekennzeichnet,
daß die Programmierung in der Ablaufsteuerschaltung (6) entsprechend festgelegten Funktionsabläufen der zu versorgenden Stromversorgungsanlagen in getakteter bzw. thyristorgesteuerter Technik sowie den in den Benutzeranforderungen festgelegten Meldungsumfang realisiert ist,
daß die Anpassung der Eingangsspannungen der analogen Eingänge der Ablaufsteuerschaltung (6) an die vorhandenen Spannungen über Spannungsteiler bzw. Trennverstärker erfolgt,
daß die Anpassung der binären Eingänge an bestimmte vorhandene Steuerspannungen durch Interface-Relais oder Spannungsteiler realisiert ist und
daß Steuersignale, die über potentialfreie Kontakte der Gleichrichtermodule geschaltet werden, wahlweise gegen Null oder eine Plusspannung geschaltet werden, wobei die Ablaufsteuerschaltung (6) sowohl mit positiver als auch mit negativer Schaltlogik arbeitend realisierbar ist.

5. Schaltungsanordnung nach einem der Patentansprüche 1 bis 4, dadurch gekennzeichnet,
daß der optional einsetzbare Gegenzellenbaustein (5) aus Reduktionsdioden (20) und Überbrückungsschützen (21 bzw. K3, K5) besteht, die über eine Steuerleitung (9) mit der Ablaufsteuerschaltung (6) verbunden sind.

6. Schaltungsanordnung nach einem der Patentansprüche 1 bis 5, dadurch gekennzeichnet,
daß die Gleichrichter (3, 3'), die Batterie (11) und die Verbraucher (13) parallel geschaltet sind,
daß zwischen den Ausgangsleitungen der Gleichrichter (3 bzw. 3') ein Entladeschütz (12) angeordnet ist, der von der Ablaufsteuerung (6) gesteuert wird und
daß die Batterie (11) in zwei Zellen (16 bzw. 17) aufgeteilt ist, deren Anzapfung über eine Diode (19) mit der Ausgangsleitung des Gleichrichters (3') für ein zweites Potential verbunden ist.
